# EUROPÄISCHE PATENTSCHRIFT

(11) **EP 1 974 794 B1**
(45) Veröffentlichungstag und Bekanntmachung des Hinweises auf die Patenterteilung: **02.01.2019**
(21) Anmeldenummer: 08102669.2
(22) Anmeldetag: 17.03.2008
(51) Int. Cl.: B01D 46/52, B01D 46/00, B60H 3/06, B01D 46/10

(54) **Filterelement**
Filter element
Elément de filtre

(30) Priorität: 30.03.2007 DE 202007004794 U
(43) Veröffentlichungstag der Anmeldung: 01.10.2008
(73) Patentinhaber: MANN+HUMMEL GmbH, 71636 Ludwigsburg (DE)
(72) Erfinder: Volkmer, Daniel, 71282 Hemmingen (DE); Brenneis, Fritz, 84163 Marklkofen (DE); Grad, Maximilian, 84163 Marklkofen (DE); Weindl, Markus, 84163 Steinberg (DE)
(74) Vertreter: Börger, Saskia Lena

(56) Entgegenhaltungen:
- EP-A1- 1 134 014
- DE-A1- 10 231 696
- DE-A1- 10 241 748
- DE-A1- 10 324 681
- DE-C1- 19 512 678
- DE-C1- 19 512 678

## Beschreibung

### Technisches Gebiet

Die vorliegende Erfindung betrifft ein Filterelement, insbesondere einen Innenraumfilter zum Filtern von Luft für den Innenraum eines Kraftfahrzeugs.

Ein solches Filterelement dient der Filterung von Fluidströmungen oder gasförmigen Medien, beispielsweise zur Filterung einer Luftströmung, die dem Fahrzeuginnenraum eines Kraftfahrzeugs zugeführt wird. Obwohl auf beliebige Filterelemente anwendbar, werden die vorliegende Erfindung sowie die ihr zugrunde liegende Problematik nachfolgend mit für ein Filterelement zur Filterung von Luft für den Innenraum eines Kraftfahrzeugs beschrieben. Solche Filter werden nachfolgend auch kurz als Kfz-Innenraumluftfilter oder auch Innenraumfilter bzw. Kabinenluftfilter bezeichnet.

Die zunehmende Luftverunreinigung, insbesondere in Großstädten, in Verbindung mit dem Einsatz moderner Klimaanlagen macht es wünschenswert und auch erforderlich, die von außen in den Innenraum eines Kraftfahrzeuges geleitete und aufbereitete bzw. klimatisierte Luft mittels geeigneter Filter zu reinigen. Hierfür kommen beispielsweise Partikelfilter oder Geruchsfilter oder deren Kombination miteinander in Betracht, die in der Luft enthaltene Schwebstoffe, Partikel und Gerüche aus der Umgebungsluft möglichst gut herausfiltern bzw. absorbieren sollen. Solche Filter zur Filterung von Luft für den Innenraum eines Kraftfahrzeuges sind in einer Vielzahl von Ausführungsformen und Varianten allgemein bekannt, so dass auf deren Aufbau und Funktionsweise nachfolgend nur kurz eingegangen wird.

Da die Wirksamkeit von Filtern insbesondere von der Größe der von der Luft durchströmten Oberfläche des Filters abhängig ist, kommen für Kfz-Innenraumluftfilter überwiegend zickzackförmig gefaltete Filtermedien, die auch als plissierte Filtermedien bezeichnet werden, zum Einsatz. Durch die Faltung des verwendeten Filtermediums kann abhängig von der Faltungshöhe, dem Faltungsabstand und dem Grad des Zusammenstauchens dieser ziehharmonikaähnlichen Filterpacks der verschiedenen Faltabschnitte des Filtermediums eine Vergrößerung der von dem Luftstrom durchströmten Filterfläche ermöglicht werden. Um entsprechende Filterelemente mit zickzackförmig gefalteten Filtermedien insbesondere montagetechnisch besser handhaben zu können, sind oft Verstärkungselemente an den Seiten des Filterelementes entlang dem Filterpack aus dem gefalteten Medium vorgesehen. Diese Armierungselemente dienen der seitlichen Fixierung und Stabilisierung des zickzackförmigen Filtermediums und sind mittels eines geeigneten Klebers an den seitlichen Kanten des Faltenpacks angebracht. Das Filterelement mit an den gefalteten Längsseiten streifenförmig angebrachten Armierungen oder Verstärkungen kann auf diese Weise montagetechnisch einfach ohne es zu beschädigen in ein Gehäuse eines Filtermoduls bzw. einer entsprechenden Filteraufnahme, beispielsweise in ein Filtergehäuse oder eine Klimaanlage eines Kraftfahrzeuges, eingefügt werden.

### Stand der Technik

Ähnliche Filterelemente sind z.B. in den deutschen Patentanmeldungen DE 102 31 696 A1 und DE 102 41 748 A1 beschrieben.

Aus der Patentschrift DE 19512678 C1 ist ein als Faltenpack ausgestalteter Filtereinsatz bekannt, dessen Stirnseiten mit jeweils einer kombinierten Dichtungs- und Versteifungslasche versehen sind, welche im Querschnitt wurzelzeichenförmig ausgebildet sind.

Aus der Offenlegungsschrift DE 10324681 A1 ist ein Filterelement mit einem zickzackförmig gefalteten Faltenpack bekannt, welches an mindestens einer Stirnseite mit einem Abschlusselement versehen ist, das eine Versteifung des Faltenpacks und eine Abdichtung des Filterelements gegen eine Wandfläche einer Filteraufnahme bewirkt.

Neben der Notwendigkeit der Stabilität der Filterelemente oder Filtereinsätze müssen diese auch an den Randbereichen zu den entsprechenden Gehäusen dicht abschließen, damit die zu filternde Luft weitestgehend durch das Filtermedium bzw. den Faltenpack strömt und nicht daran vorbeiströmt.

Es ist ferner gewünscht, dass diese Filterelemente neben der einfachen montagetechnischen Handhabbarkeit möglichst auch kostengünstig sein sollten und damit insbesondere herstellungstechnisch möglichst einfach zu produzieren sind. Dabei ist es auch wünschenswert möglichst wenig Filtermaterial, wie z. B. Filtervlies, einzusetzen.

Vor diesem Hintergrund liegt der vorliegenden Erfindung die Aufgabe zugrunde, ein verbessertes Filterelement zu schaffen, dass insbesondere in den Randbereichen eine ausreichende Stabilität sowie einen dichten Abschluss mit einem Filtergehäuse aufweist.

### Offenbarung der Erfindung

Erfindungsgemäß wird zumindest eine der genannten Aufgaben durch ein Filterelement mit den Merkmalen des Patentanspruchs 1 gelöst.

Demgemäß ist ein Filterelement, insbesondere zur Filterung von Luft bzw. zur Absorption von Schadgasen für den Innenraum bzw. die Kabine eines Kraftfahrzeuges vorgesehen, dass einen zickzackförmig gefalteten Faltenpack und mindestens ein zur Faltung des Faltenpacks parallel gefaltetes Abschlusselement aufweist, wobei das Abschlusselement einen ersten im Wesentlichen senkrecht zu einer Durchflussrichtung des Filterelementes angeordneten Schenkel, einen zweiten Schenkel und einen dritten Schenkel aufweist und die Schenkel durch Faltkanten des Abschlusselementes begrenzt sind.

Gemäß der Erfindung wird eine seitliche Stabilität beispielsweise der Kopfseite des Filterelementes durch die zwei Faltkanten bzw. Faltungen des Abschlusselementes erzielt, wobei zusätzlich eine besondere Dichtigkeit durch die in der Regel abstehenden zweiten und/oder dritten Schenkel vorliegt. Der erste und der zweite Schenkel bilden vorzugsweise im Wesentlichen einen rechten Winkel miteinander. In diesem Fall kann die Faltkante zwischen dem ersten und zweiten Schenkel gleichzeitig den seitlichen Abschluss des Faltenpacks bilden, wobei z. B. der dritte Schenkel zur Randabdichtung seitlich von dem Filterelement absteht.

Es ist ferner ein Seitenband an dem Filterelement vorgesehen, welches einteilig auf mehrere quer geschnittene Falten des Faltenpacks angebracht ist. Während das Abschlusselement eine Seite des Filterelementes abschließt, die im Wesentlichen parallel zu den Faltungen des Faltenpacks verläuft, begrenzt das Seitenband Seiten des Filterelementes, die in einem nicht verschwindenden Winkel zu den Faltungen des Faltenpacks verlaufen. Denkbar sind z. B. quadratische, rechteckige oder polygonale Grundrisse des Filterelementes, wobei unter Grundriss eine Fläche senkrecht zur Durchflussrichtung des zu filternden Mediums verstanden wird. Ein Durchströmen von zu filternder Luft kann beispielsweise senkrecht zu den Faltungen des Faltenpacks und in einem spitzen Winkel zu den Faltungsabschnitten des Faltenpacks erfolgen, wenn der Filter senkrecht zu der Strömung angeordnet ist. Grundsätzlich kann die zu filternde Luft die Faltungen des Faltenpacks aber auch unter einem anderen Winkel bzw. anderen Winkeln durchströmen, je nachdem wie der Filter in der Strömung angeordnet ist. Das erfindungsgemäße Filterelement legt dabei prinzipiell keine Vorzugsrichtung für die Durchflussrichtung fest.

Vorzugsweise ist dann das Seitenband aus einem beispielsweise gleich dicken oder dickeren Material als das Abschlusselement gefertigt. Erfindungsgemäss liegt der erste Schenkel des Abschlusselementes auf einer Kante des Seitenbandes auf, wodurch das Seitenband und der erste Schenkel des Abschlusselementes einen stabilen Rahmen um den Faltenpack des Filterelementes bilden.

In einer weiteren Ausführungsform liegt der erste Schenkel des Abschlusselementes auf einer Faltkante des Faltenpacks auf. Dann verleiht der erste Schenkel des Abschlusselementes, der z. B. auf der Faltkante verklebt sein kann, mit seiner Faltung, die den Übergang zum zweiten Abschlusselement darstellt, eine erhöhte Stabilität.

Erfindungsgemäß ist ein Faltenendabschnitt des Faltenpacks mit dem zweiten Schenkel des Abschlusselementes verklebt. Der dritte Schenkel des Abschlusselementes steht seitlich von dem Filterelement ab, und der erste Schenkel liegt im Wesentlichen parallel zu dem Querschnitt, also senkrecht zu der Durchflussrichtung des zu reinigenden Mediums durch das Filterelement bzw. den Faltenpack.

Denkbar ist auch, dass ein Faltenendabschnitt des Faltenpacks mit dem zweiten Schenkel des Abschlusselementes einen nicht verschwindenden Winkel einschließt, d.h. einen Winkel ungleich 0° ist. Eine Endkante des Faltenendabschnittes kann z. B. in die Faltung zwischen dem ersten Schenkel und dem zweiten Schenkel des Abschlusselementes eingeklebt werden, wodurch eine besonders stabile Faltung erfolgt, die ferner durch die Faltkante zwischen dem dritten und zweiten Schenkel zusätzliche Stabilität erfährt.

In noch einer alternativen Ausführungsform des Filterelementes ist ein verkürzter Faltenendabschnitt auf den zweiten Schenkel des Abschlusselementes geklebt. In diesem Fall kann z. B. eine letzte Faltung des Faltenpacks in die Faltinnenkante der Faltung zwischen dem ersten und zweiten Schenkel eingepasst sein.

In einer bevorzugten Ausführungsform des Filterelementes besteht das Filterelement ausschließlich aus dem Faltenpack, zwei Seitenbändern und zwei Abschlusselementen, die geeignet miteinander verbunden beispielsweise verklebt sind. Diese bevorzugte Ausführungsform weist eine ausreichende Stabilität auf und erlaubt mit geringstem Materialaufwand ein Filterelement aufzubauen.

In weiteren möglichen Ausführungsformen ist z. B. mindestens ein weiterer an den dritten Schenkel angrenzender Schenkel des Abschlusselementes vorgesehen, das Abschlusselement kann einstückig ausgeführt sein, wobei z. B. die Schenkel durch geschlitzte Knicke des Abschlusselementmaterials gebildet sind. In bevorzugten Ausführungsformen entspricht die Breite des zweiten Schenkels der Höhe des Filterelementes. In einer weiteren Ausführungsform kann die Summe aus der Breite des zweiten Schenkels und der Breite des dritten Schenkels der Höhe des Filterelementes entsprechen oder vorzugsweise größer als diese sein.

Weitere vorteilhafte Ausgestaltungen und Weiterbildungen sind Gegenstand der Unteransprüche sowie der im Folgenden beschriebenen Ausführungsbeispiele.

### Kurze Beschreibung der Zeichnungen

Die Erfindung wird nachfolgend anhand der in den Figuren der Zeichnung angegebenen Ausführungsbeispiele näher erläutert. Dabei zeigen:
Fig. 1 eine perspektivische Ansicht eines ersten Ausführungsbeispiels eines erfindungsgemäßen Filterelements;
Fig. 2 eine perspektivische Ansicht eines zweiten Ausführungsbeispiels eines erfindungsgemäßen Filterelements;
Fig. 3 - 10 Detailansichten von Faltungsquerschnitten von Ausführungsformen des Abschlusselementes.

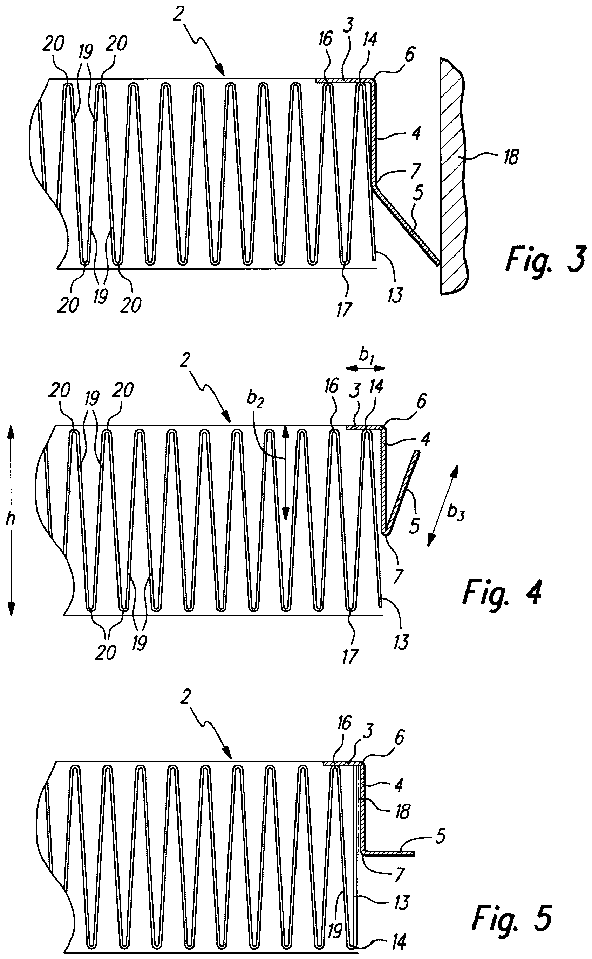

Die Ausführungsformen gemäß den Figuren 4, 6 und 7 sind von den Patentansprüchen nicht umfasst. In den Figuren der Zeichnung sind gleiche oder funktionsgleiche Elemente und Merkmale - sofern nichts Anderes angegeben ist - mit denselben Bezugszeichen versehen.

### Ausführungsform(en) der Erfindung

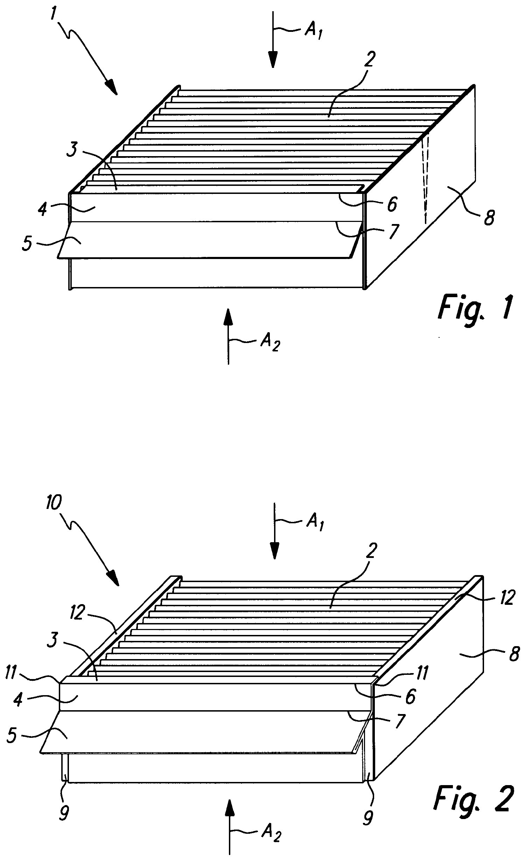

In der Fig. 1 ist eine perspektivische Darstellung eines ersten Ausführungsbeispiels für ein erfindungsgemäßes Filterelement dargestellt. Das Filterelement 1 hat hier beispielhaft einen rechteckigen Grundriss. Der Faltenpack 2 besteht aus einem zickzackförmig gefalteten Filtermedium, wie einem Filtervlies, Papier aus Zellstoff, das für ein fluides oder gasförmiges Medium durchlässig ist und z. B. auch mit Aktivkohle belegt sein kann. Als Materialdicken kommen Dicken von 0,5 - 2 mm bevorzugt in Frage. In bestimmten Fällen und für besondere Einsatzbereiche sind jedoch auch abweichende Materialdicken denkbar. Es ist auch möglich, ein Polyestermaterial als Filtervlies zu verwenden.

An den Seiten des Filterelementes 1, die parallel zur Faltung des Faltenpacks 2 verlaufen, ist in der Darstellung der Fig. 1 dem Betrachter zugewandten Seite, ein Abschlusselement 3, 4, 5 vorgesehen, das drei Schenkel aufweist, die durch jeweils eine Faltung 6, 7 begrenzt sind. Ein erster Schenkel liegt quer zu einer Durchflussrichtung des zu filternden Mediums, wie beispielsweise der Luft, die hier durch einen Pfeil A1 bzw. A2 angedeutet ist. In der Darstellung der Fig. 1 ist eine Durchflussrichtung nach unten A1 oder auch nach oben A2 durch den Faltenpack 2 möglich.

Eine Faltkante 6 begrenzt den ersten Schenkel 3 von dem zweiten Schenkel 4 des Abschlusselementes, und eine zweite Faltkante 7 trennt den zweiten Schenkel 4 von dem dritten Schenkel 5. Der dritte Schenkel 5 steht dabei seitlich von dem Filterelement ab und schafft einen engen Randschluss mit einer Gehäusewand im eingebauten Zustand des Filterelementes 1. Dann kann beispielsweise bei einer Durchflussrichtung A2 Luft in diese durch den dritten Schenkel 5 gebildete Seitenlasche einströmen und drückt den dritten Winkel 5 weiter nach außen.

Senkrecht zur Faltung des Faltenpacks begrenzen Seitenbänder 8 das Filterelement 1. Somit wird der Faltenpack, der auch als Ziehharmonikapack oder Faltenbalg bezeichnet werden kann, von einem Rahmen aus den Seitenbändern 8 und einem L-förmigen Winkel aus dem ersten 3 und zweiten Schenkel 4 des Abschlusselementes eingefasst. Bereits die erste Faltkante 6 verleiht diesem Rahmen eine gewisse Stabilität. Durch die zweite Faltkante 7 zwischen dem zweiten 4 und dritten Schenkel 5 wird diese zusätzlich verbessert. Man kann auch von einer Armierung oder Versteifung des Faltenpacks oder Filterelementes durch die Seitenbänder 8 und Abschlusselemente 3, 4, 5 sprechen. Zusätzlich zu dieser besonders stabilen Umfassung ergibt sich durch den seitlich abstehenden dritten Schenkel 5 ein besonders guter Randabschluss und damit eine Dichtung im eingebauten Zustand des Filterelements 1.

Mittels des Knickes bzw. der Faltkanten 6, 7, die beispielsweise durch geschlitzte bzw. angeritzte oder eingeprägte Knicke in dem Material des Abschlusselementes ausgeführt sein können, kann die Breite des ersten Schenkels 3 besonders gering gewählt werden, was zu einem verbesserten Durchströmungsquerschnitt des Filterelementes führt. Üblicherweise müssen mehrere Faltkanten des Faltenpacks mit einem darauf aufgeklebten Schenkel überdeckt werden, um eine ausreichende Stabilität hervorzurufen. Gemäß der Erfindung wird jedoch die Dichtwirkung einer durch den dritten Schenkel 5 gebildeten Seitenlasche mit den stabilisierenden Eigenschaften der Faltungen 6, 7 kombiniert, um ein besonders kostengünstig herzustellendes Filterelement 1 auszubilden.

Das Ausführungsbeispiel gemäß der Erfindung für ein Filterelement 1 hat somit einen besonders niedrigen Materialaufwand und ist einfach herzustellen, da es in dem quaderförmigen Beispiel der Fig. 1 nur aus zwei Seitenbändern 8, dem Faltenpack 2, sowie zwei Abschlusselementen 3, 4, 5 besteht. Die Verbindungen zwischen diesen Elementen können durch eine geeignete Verklebung erfolgen. Dabei kann der Klebstoff im ausgehärteten Zustand dem Vliesmaterial zusätzliche Stabilität verleihen.

In der Fig. 2 ist eine perspektivische Ansicht eines zweiten Ausführungsbeispiels eines erfindungsgemäßen Filterelementes dargestellt. Das zweite Ausführungsbeispiel 10 weist im Wesentlichen dieselben Elemente wie das in der Fig. 1 Gezeigte auf.

In dem Filterelement 10 der Fig. 2 sind die Seitenbänder 8 aus einem gleich dicken oder dickeren Material als die Abschlusselemente 3, 4, 5 und das gefaltete Material des Faltenpacks 2 gewählt. Ein jeweiliges Seitenband 8 weist somit eine Kante 9, 12 auf, auf die an den Ecken 11 des Filterelementes 10 das Abschlusselement aufgeklebt werden kann. Somit liegt beispielsweise der erste Schenkel 3 auf der oberen Kante 12 des Seitenbandes 8 auf und ist dort verklebt. Der zweite Schenkel 4 ist an seinen Endseiten auf die dem Betrachter zugewandte Kante 9 des Seitenelementes 8 aufgeklebt. In dieser Ausführungsform des Filterelementes 10 wird an den Ecken 11 eine besondere Stabilität durch die Verklebung und die Faltkanten 6, 7 erzielt.

Im Folgenden sind mögliche Ausgestaltungen der Abschlussbereiche des Filterelementes im Querschnitt näher erläutert. Dabei zeigen die folgenden Figuren Schnitte senkrecht zu den Faltungen des Faltenpacks.

In der Fig. 3 ist der Faltenpack 2 schematisch dargestellt. Der Faltenpack 2 wird durch beispielhaft mit 19 und 20 bezeichneten Faltenabschnitte 19 und Biege- oder Faltkanten 20 gebildet. Der Faltenbalg schließt einerseits mit einer Schnittfläche durch den Faltenpack ab und andererseits mit einem Faltenendabschnitt 13, der an der Endfalte 14 des Faltenpacks 2 anschließt. Auf die Schnittfläche kann z. B. ein Seitenband, wie in den Fig. 1 und 2 dargestellt, aufgeklebt werden.

In der Fig. 3 ist der erste Schenkel 3 des Abschlusselementes auf zwei Faltkanten 14, 16 am Rande des Faltenpacks 2 aufgelegt. An den Auflagepunkten kann z. B. eine Verklebung erfolgen. Ferner verläuft der zweite Schenkel 4 durch einen Knick oder eine Biegefalte 6 ausgehend von dem ersten Schenkel 3 im Wesentlichen in einem rechten Winkel zu dem ersten Schenkel 3.

Daran schließt sich über die Falte oder Biegekante 7 der dritte Schenkel 5 des Abschlusselementes ein. Es ist ferner ein Teil des jeweiligen Gehäuses 18, in das das Filterelement eingebaut werden kann, dargestellt. Der dritte Schenkel 5 steht seitlich von dem Filterelement ab und stößt gegen das Filtergehäuse 18. Somit erfolgt durch den dritten Schenkel 5 eine Abdichtung zwischen dem Filterelement und dem Gehäuse 18. Ferner ist der dargestellte Randbereich des Filterelementes einerseits durch den auf die Faltungen 14, 16 des Faltenpacks 2 angeordneten ersten Schenkel sowie die beiden z. B. geschlitzten Knicke 6, 7 des Abschlusselementes äußerst stabil.

In der Fig. 3 reicht der dritte Schenkel in seiner Breite über das Faltenpack hinaus, d. h. in an dem Faltenendabschnitt 13 angeschmiegtem Zustand des zweiten und dritten Schenkels 4, 5 ragt der dritte Schenkel 5 in der Darstellung der Fig. 3 nach unten hinaus.

In der Fig. 4 ist ein von den Ansprüchen nicht umfasstes Abschlusselement dargestellt. Der erste Schenkel 3 ist hier auf nur eine Endfaltung 14 des Faltenpacks 2 von der Oberseite angebracht. Der Faltenendabschnitt 13 liegt damit praktisch frei, erhält jedoch Stabilität durch die in der Fig. 4 nicht dargestellte Verklebung mit dem Seitenband, wie es aus den Fig. 1 und 2 entnehmbar ist.

In der Fig. 4 ist eine Situation dargestellt, in der der zweite und dritte Schenkel 4, 5 des Abschlusselementes einen spitzen Winkel miteinander bilden. Damit wird eine erhöhte Kraft durch die Rückstellkräfte der Faltung 7 in horizontaler Richtung also senkrecht von den Faltungen des Faltenpacks 2 weg in Richtung auf eine mögliche Gehäusewand erzielt.

Die Größenverhältnisse von der Höhe des Filterelementes h, die durch die Breite der Faltenabschnitte 19 und die Knickwinkel der Faltungen 20 gegeben ist, mit der Breite b1, b2, b3 der Schenkel 3, 4, 5 des Abschlusselementes sind in dem Beispiel der Fig. 4 derart gewählt, dass die Summe aus der Breite b2 des zweiten Schenkels 4 mit der Breite b3 des dritten Schenkels 5 der Höhe h des Filterelements entsprechend. Das Abschlusselement bedingt hier nur einen minimalen Materialaufwand, da durch die beiden Faltungen 6, 7 bzw. Faltkanten eine hohe Stabilität erreicht wird und nur eine Endfalte 14 des Faltenpacks überdeckt werden muss.

In der Fig. 5 ist eine mögliche Realisierung eines erfindungsgemäßen Filterelementes dargestellt. Dabei ist der Filterendabschnitt 13 über eine Verklebung 18 mit dem zweiten Schenkel 4 verbunden, und der erste Schenkel 3 liegt auf der letzten oberseitigen Faltkante 16 des Faltenpacks 2 auf. Der Faltenendabschnitt 13 und der zweiten Schenkel 4 verlaufen aufeinander angeschmiegt parallel und bilden mit dem ersten Schenkel 3 einen rechten Winkel. Es wird durch die Verklebung 18 eine zusätzliche Steifigkeit des in der Fig. 5 dargestellten Randbereiches erreicht, die durch die Faltungen 6, 7 ferner verstärkt wird. Durch die Schenkel 3 und 4 und den Faltenendabschnitt 13 sowie dem vorletzten Faltenabschnitt 19 wird eine stabile 3-seitige Struktur geschaffen.

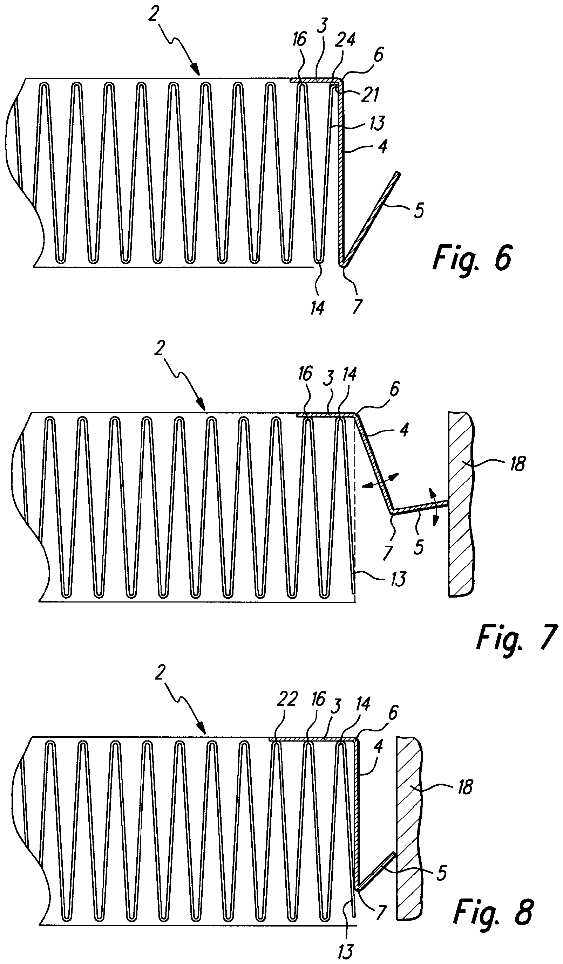

In der Fig. 6 ist eine von den Ansprüchen nicht umfasste Ausführungsform dargestellt. Hier ist eine Endkante 21 des Faltenendabschnittes 13 in den durch den ersten und zweiten Schenkel 3, 4 gebildeten Winkel über eine Klebung 24 eingeklebt. Der erste Schenkel 3 hat als Auflagefläche diese Endkante 21 bzw. die Verklebung 24 und die vorletzte Faltkante 16 des Faltenpacks. Der zweite Schenkel 4 verläuft über die gesamte Höhe des Faltenpacks 2 bzw. des Filterelementes. Der dritte Schenkel 5 steht seitlich von dem Filterelement ab, wobei die Faltkante 7 den unteren Abschluss des zweiten Schenkels und damit des Filterelementes bildet. Die Kanten 14, 16 und 6 bzw. 24 bilden ein stabiles Profil.

In der Fig. 7 ist eine von den Patentansprüchen nicht umfasste Ausführungsform eines Filterelementes dargestellt. Der erste Schenkel 3 ist auf zwei Faltkanten 14, 16 des Faltenpacks 2 angeordnet z. B. verklebt und sowohl der zweite Schenkel 4 wie auch der dritte Schenkel 5 stehen seitlich von dem Filterelement ab. Die Beweglichkeit der zweiten und dritten Schenkel 4, 5 über die Faltungen 6, 7 ist durch Pfeile dargestellt. Eine Abdichtung in Richtung einer Filtergehäuseseite 18 geschieht dabei durch ein Zusammenstauchen der Knicke 6, 7 des Abschlusselementes.

Die Fig. 8 zeigt eine weitere mögliche Ausführungsform für das Abschlusselement. Dabei überdeckt der erste Schenkel 3 drei Faltungen bzw. liegt auf drei Faltkanten 14, 16, 22 des Faltenpacks 2 auf. Ferner bildet der Faltenendabschnitt 13 und der zweite Schenkel 4 einen sehr spitzen Winkel miteinander. Der dritte Schenkel 5 ist nach oben gebogen, wodurch durch den Knick 7 zwischen dem zweiten und dritten Schenkel 4, 5 eine besonders hohe Spannung erzeugt wird, die in einer Rückstellkraft in Richtung auf die Gehäusewand 18 führt. Durch das Überdecken bzw. Aufliegen auf mehreren Faltkanten 14, 16, 22 des Faltenpacks 2 wird die Stabilität in den Randbereichen des Filterelementes erhöht, welches zudem über die Faltkanten 6, 7 weitere Steifigkeit erfährt.

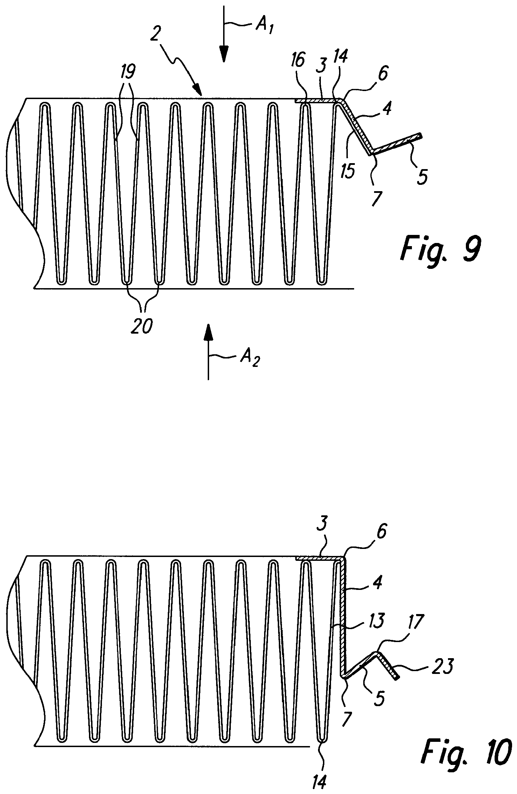

In der Fig. 9 ist noch ein Ausführungsbeispiel dargestellt, wobei der Faltenendabschnitt 15 gegenüber den übrigen Faltabschnitten 19 des Faltenpacks 2 verkürzt ist. Der erste Schenkel 3 liegt auf zwei Faltkanten 14, 16 des Faltenpacks 2 auf, und die Endfaltung 14 des Faltenpacks 2, welche in den verkürzten Faltenendabschnitt 15 übergeht, liegt in der Faltkante 6 zwischen dem ersten und zweiten Schenkel 3, 4. Der zweite Schenkel 4 und der verkürzte Faltenendabschnitt 15 sind beispielsweise miteinander verklebt und haben dieselbe Breite, sodass mit der Faltkante 7 ein Übergang in den dritten Schenkel 5 erfolgt.

Die Verklebung des verkürzten Faltenendabschnittes 15 mit dem zweiten Schenkel 4 liefert durch den verwendeten Klebstoff weitere Stabilität und Steifigkeit auch hinsichtlich der durch die Faltkanten 6, 7 und 14 erzeugten Rückstellkraft in horizontaler Richtung und daher senkrecht zu einer möglichen Durchflussrichtung A1, A2 der zu filternden Luft oder allgemein des zu filternden Mediums. Die in der Fig. 9 dargestellte Ausführungsform ist ebenfalls besonders materialsparend.

Abschließend ist noch eine Weiterbildung des erfindungsgemäßen Filterelementes in der Fig. 10 dargestellt. Es umfasst im Wesentlichen dieselben Elemente, wie es in den vorangehenden Fig. 3 - 9 erläutert wurde und ferner einen weiteren Schenkel 23 der über eine Faltkante 17 an den dritten Schenkel 5 anschließt. Durch die Erhöhung der Anzahl der Schenkel insbesondere im Anschluss an den zweiten Schenkel 4 lässt sich eine weitere verbesserte Abdichtung gegenüber einem Gehäuse erzielen, da die weiteren Knicke bzw. Faltungen 7, 17 zusätzliche Rückstellkräfte in horizontaler also senkrechter Richtung zur Durchflussrichtung des zu filternden Mediums erzeugen.

Obwohl die vorliegende Erfindung anhand bevorzugter Ausführungsbeispiele näher erläutert wurde, ist sie nicht darauf beschränkt, sondern vielfältig modifizierbar. Die in den Figuren dargestellten Falt- und Verklebemöglichkeiten sowie Breiten der Schenkel des Abschlusselementes lassen sich in vielfältiger Weise kombinieren und sind nicht auf die explizit dargestellten Formen in den Figuren beschränkt. Ferner lassen sich alle Ränder oder Teile der Umrandung eines entsprechenden Filterpacks mit entsprechenden Abschlusselementen ausstatten.

Die in der Fig. 1 und 2 dargestellte Querschnittsform des Filterelementes lässt sich ebenfalls abwandeln, sodass halbkreisförmige oder unregelmäßige Formen je nach Anforderungen durch das Filtergehäuse ermöglicht werden.

## Patentansprüche

1. Filterelement (1, 10), insbesondere zur Filterung von Luft für den Innenraum eines Kraftfahrzeugs, mit einem zickzackförmig gefalteten Faltenpack (2) und mindestens einem zur Faltung des Faltenpacks parallelen gefalteten Abschlusselement, welches einen ersten senkrecht zu einer Durchflussrichtung (A₁, A₂) des Filterelementes angeordneten Schenkel (3), einen zweiten Schenkel (4) und einen dritten Schenkel (5) aufweist, wobei die Schenkel (3, 4, 5) durch Faltkanten (6, 7) des Abschlusselementes begrenzt sind, wobei der dritte Schenkel (5) zum Bilden einer Randabdichtung seitlich von dem Filterelement (1, 10) absteht und ein Faltenendabschnitt des Faltenpacks (2) mit dem zweiten Schenkel (4) des Abschlusselementes verklebt ist und eine erste Faltung des Abschlusselements die Faltkante (6) zwischen dem ersten Schenkel (3) und dem zweiten Schenkel (4) bildet und eine der ersten Faltung entgegengesetzte zweite Faltung des Abschlusselements die Faltkante (7) zwischen dem zweiten Schenkel (4) und dem dritten Schenkel (5) bildet, wobei das Filterelement (1, 10) ferner ein Seitenband (8) aufweist, welches einteilig auf mehrere quer geschnittene Falten des Faltenpacks (2) angebracht ist und wobei der erste Schenkel (3) des Abschlusselements auf einer Kante (12) des Seitenbandes (8) aufliegt, wodurch das Seitenband (8) und der erste Schenkel (3) des Abschlusselements einen stabilen Rahmen um den Faltenpack (2) bilden.

2. Filterelement (1, 10) nach Anspruch 1, **dadurch gekennzeichnet, dass** der erste und der zweite Schenkel (3, 4) einen rechten Winkel miteinander bilden.

3. Filterelement (1, 10) Anspruch 1 oder 2, **dadurch gekennzeichnet, dass** das Seitenband (1, 10) aus einem gleich dicken oder dickeren Material als das Abschlusselement gefertigt ist.

4. Filterelement (1, 10) nach einem der Ansprüche 1 - 3, **dadurch gekennzeichnet, dass** der erste Schenkel (3) des Abschlusselements auf einer Faltkante (14, 16) des Faltenpacks (2) aufliegt.

5. Filterelement (1, 10) nach einem der Ansprüche 1 - 4, **dadurch gekennzeichnet, dass** ein Faltenendabschnitt (13) des Faltenpacks (2) mit dem zweiten Schenkel (4) des Abschlusselementes einen nicht verschwindenden Winkel einschließt.

6. Filterelement (1, 10) nach einem der Ansprüche 1 - 5, **dadurch gekennzeichnet, dass** ein verkürzter Faltenendabschnitt (15) auf den zweiten Schenkel (4) des Abschlusselementes geklebt ist.

7. Filterelement (1, 10) nach einem der Ansprüche 1 - 6, **dadurch gekennzeichnet, dass** das Filterelement (1, 10) ausschließlich das Faltenpack (2), zwei Seitenbänder (8) und zwei Abschlusselemente (3, 4, 5) aufweist, die miteinander verklebt sind.

8. Filterelement (1, 10) nach einem der Ansprüche 1 - 7, **dadurch gekennzeichnet, dass** das Abschlusselement mindestens einen an den dritten Schenkel (5) angrenzenden weiteren Schenkel (16) aufweist.

9. Filterelement (1, 10) nach einem der Ansprüche 1 - 8, **dadurch gekennzeichnet, dass** das Abschlusselement (3, 4, 5) einstückig ausgeführt ist.

10. Filterelement (1, 10) nach einem der Ansprüche 1 - 9, **dadurch gekennzeichnet, dass** die Schenkel (3, 4, 5, 16) durch geschlitzte Knicke des Abschlusselementmaterials gebildet sind.

11. Filterelement (1, 10) nach einem der Ansprüche 1 - 10, **dadurch gekennzeichnet, dass** die Breite (b₂) des zweiten Schenkels (4) der Höhe (h) des Filterelementes entspricht.

12. Filterelement (1, 10) nach einem der Ansprüche 1 - 11, **dadurch gekennzeichnet, dass** die Summe aus der Breite (b₂) des zweiten Schenkels (4) und der Breite (b₃) des dritten Schenkels (5) der Höhe (h) des Filterelementes (2) entspricht oder größer ist als diese.

## Claims

1. A filter element (1, 10), in particular for filtering air for the interior space of a motor vehicle, with a zigzag folded pleated pack (2) and at least one end element folded in parallel to the pleats of the pleated pack, the end element comprising a first leg (3) which is arranged perpendicular to a flow passage direction (A₁, A₂) of the filter element, a second leg (4) and a third leg (5), wherein the legs (3, 4, 5) are delimited by folding edges (6, 7) of the end element, wherein the third leg (5) protrudes laterally away from the filter element (1, 10) for forming a lateral sealing and an end fold section of the pleated pack (2) is glued to the second leg (4) of the end element and a first folding of the end element forms the folding edge (6) between the first leg (3) and the second leg (4), and a second folding of the end element having an opposite orientation with respect to the first folding forms the folding edge (7) between the second leg (4) and the third leg (5), wherein the filter element (1, 10) further comprises a lateral strip (8) which is mounted as one piece on several transversely cut pleats of the pleated pack (2), and wherein the first leg (3) of the end element is supported by an edge (12) of the lateral strip (8), wherein the lateral strip (8) and the first leg (3) of the end element form a robust frame around the pleated pack (2).

2. The filter element (1, 10) according to claim 1, characerized in that the first and the second leg (3, 4) form a right angle with one another.

3. The filter element (1, 10) according to claim 1 or 2, characerized in that the lateral strip (8) ist formed of a material having the same thickness or a greater thickness than the end element.

4. The filter element (1, 10) according to one of claims 1 - 3, **characterized in that** the first leg (3) of the end element is supported by a folding edge (14, 16) of the pleated pack (2).

5. The filter element (1, 10) according to one of claims 1 - 4, **characterized in that** an end fold section (13) of the pleated pack (2) forms a non-vanishing angle with the second leg (4) of the end element.

6. The filter element (1, 10) according to one of claims 1 - 5, **characterized in that** a shortened end fold section (15) is glued on the second leg (4) of the end element.

7. The filter element (1, 10) according to one of claims 1 - 6, **characterized in that** the filter element (1, 10) exclusively comprises the pleated pack (2), two lateral strips (8) and two end portions (3, 4, 5), which are glued to one another.

8. The filter element (1, 10) according to one of claims 1 - 7, **characterized in that** the end element comprises at least one further leg (16) which is adjacent to the third leg (5).

9. The filter element (1, 10) according to one of claims 1 - 8, **characterized in that** the end portion is formed in one piece.

10. The filter element (1, 10) according to one of claims 1 - 9, **characterized in that** the legs (3, 4, 5, 16) are formed by scored bends of the end element material.

11. The filter element (1, 10) according to one of claims 1 - 10, **characterized in that** the width (b₂) of the second leg (4) corresponds to the height (h) of the filter element.

12. The filter element (1, 10) according to one of claims 1 - 11, **characterized in that** the sum of the width (b₂) of the second leg (4) and of the width (b₃) of the third leg (5) corresponds to the height (h) of the filter element (1, 10) or is larger than the height (h).

## Revendications

1. Elément de filtre (1, 10), en particulier pour filtrer l'air pour l'intérieur d'un véhicule motorisé, avec un ensemble de plis (2) plié en zigzag et au moins un élément de terminaison plié en parallèle à la plissure de l'ensemble de plis, comprenant une première branche (3) qui est arrangée perpendiculairement à une direction de débit (A₁, A₂) de l'élément de filtre, une deuxième branche (4) et une troisième branche (5), dans lequel les branches (3, 4, 5) sont délimitées par des bords de pliage (6, 7) de l'élément de terminaison, dans lequel la troisième branche (5) fait saillie latéralement de l'élément de filtre (1, 10) afin de former une jointure de bord et une portion de terminaison de plis de l'ensemble de plis (2) est collée à la deuxième branche (4) de l'élément de terminaison et une première plissure de l'élément de terminaison forme le bord de pliage (6) entre la première branche (3) et la deuxième branche (4) et une deuxième plissure de l'élément de terminaison qui a une direction opposé à celle de la première plissure forme le bord de plissage (7) entre la deuxième branche (4) et la troisième branche (5), dans lequel l'élément de filtre (1, 10) comprend en outre une bande latérale (8), qui est attachée d'une pièce à plusieurs plis de l'ensembles de plis (2) coupés transversalement et dans lequel la première branche (3) de l'élément de terminaison repose sur un bord (12) de la bande latérale (8), de façon à ce que la bande latérale (8) et la première branche (3) de l'élément de terminaison forment un cadre solide autour de l'ensemble de plis (2).

2. Elément de filtre (1, 10) selon la revendication 1, **caractérisé en ce que** la première et la deuxième branche (3, 4) forment un angle droit entre elles.

3. Elément de filtre (1, 10) selon la revendication 1 ou 2, **caractérisé en ce que** la bande latérale (8) est formée d'un matériau de la même épaisseur ou d'une épaisseur plus élevée que l'élément de terminaison.

4. Elément de filtre (1, 10) selon l'une des revendications 1 - 3, **caractérisé en ce que** la première branche (3) de l'élément de terminaison repose sur un bord de pliage (14, 16) de l'ensemble de plis (2).

5. Elément de filtre (1, 10) selon l'une des revendications 1 - 4, **caractérisé en ce qu'**une portion de terminaison de plis (13) de l'ensemble de plis (2) forme un angle non évanouissant avec la deuxième branche (4) de l'élément de terminaison.

6. Elément de filtre (1, 10) selon l'une des revendications 1 - 5, **caractérisé en ce qu'**une portion de terminaison de plis (15) raccourcie est collée sur la deuxième branche (4) de l'élément de terminaison.

7. Elément de filtre (1, 10) selon l'une des revendications 1 - 6, **caractérisé en ce que** l'élément de filtre (1, 10) comprend exclusivement l'ensemble de plis (2), deux bandes latérales (8) et deux éléments de terminaison (3, 4, 5), qui sont collés les uns aux autres.

8. Elément de filtre (1, 10) selon l'une des revendications 1 - 7, **caractérisé en ce que** l'élément de terminaison comprend au moins une branche supplémentaire (16) adjacente à la troisième branche (5).

9. Elément de filtre (1, 10) selon l'une des revendications 1 - 8, **caractérisé en ce que** l'élément de terminaison est formé d'une seule pièce.

10. Elément de filtre (1, 10) selon l'une des revendications 1 - 9, **caractérisé en ce que** les branches (3, 4, 5, 16) sont formées par des pliures à fente du matériau de l'élément de terminaison.

11. Elément de filtre (1, 10) selon l'une des revendications 1 - 10, **caractérisé en ce que** la largeur (b₂) de la deuxième branche (4) correspond à la hauteur (h) de l'élément de filtre.

12. Elément de filtre (1, 10) selon l'une des revendications 1 - 12, **caractérisé en ce que** la somme de la largeur (b₂) de la deuxième branche (4) et de la largeur (b₃) de la troisième branche (5) correspond à la hauteur (h) de l'élément de filtre (1, 10) ou est plus grande que celle-ci.
